# DEMANDE DE BREVET EUROPEEN

(11) **EP 1 898 618 A1**
(43) Date de publication de la demande: **12.03.2008**
(21) Numéro de dépôt: 07291070.6
(22) Date de dépôt: 05.09.2007
(51) Int. Cl.: H04M 3/42

(54) **Procédé et dipositif de configuration d'un autocommutateur, autocommutateur comportant le dispositif et système de deux autocommutateur**

(30) Priorité: 05.09.2006 FR 0607777
(71) Demandeur: CS Systemes d'Informations, 92350 Le Plessis Robinson (FR)
(72) Inventeur: Le Foll, Frédéric, 92270 Bois-Colombe (FR)
(74) Mandataire: Bloch, Gérard

(57) **Abrégé**

Il s'agit de la configuration d'un autocommutateur (1) de réseau téléphonique reliant un réseau externe (2) à un réseau local (3) de terminaux de télécommunication et comportant des moyens de calcul (4), des interfaces (8, 9) des réseaux (2, 3), des premiers moyens mémoires (5) contenant des données de configuration et au moins une interface homme machine (11). Le dispositif comporte, dans l'autocommutateur (1), des moyens (6) de génération de données de configuration dans des seconds moyens mémoires (7) et des moyens de substitution (12) pour substituer en bloc les données de configuration générées dans les seconds moyens mémoires (7) aux données contenues dans les premiers moyens mémoires (5) ou le remplacement des premiers moyens mémoires (5) pas les seconds moyens mémoires (7).

## Description

La présente invention concerne les PABX (Private Automatic Branch Exchange) ou commutateurs téléphoniques privés automatiques utilisés comme autocommutateurs téléphoniques sur des réseaux téléphoniques publics.

Les PABX ont non seulement pour fonction d'assurer la continuité des communications entre les réseaux publics et privés mais aussi de préserver les services spécifiques disponibles sur les deux réseaux, en assurant notamment toutes les conversions de protocoles de communication et de débits nécessaires au bon fonctionnement des divers terminaux et de leurs interfaces de lignes tels que multiplexeurs / dé-multiplexeurs, modems, vocodeurs, etc....

Ils permettent en outre l'adjonction de services locaux supplémentaires, tels que des annuaires de routage, de renvoi, de filtrage, ... ou de téléconférence et/ou d'interphonie, ou encore de messages d'accueil et/ou de mémorisation de messages.

Naturellement, la mise en place d'un PABX nécessite une initialisation préalable du processeur qui l'équipe en fonction de l'environnement d'utilisation et des besoins des utilisateurs du réseau local correspondant. Il faut notamment configurer le système et les diverses interfaces de lignes des terminaux internes en fonction des caractéristiques physiques et des services disponibles du réseau externe et des caractéristiques physiques et services souhaités du réseau local.

Cet environnement et ces besoins d'utilisation sont préalablement codés puis les codes sont mémorisés dans des mémoires de données, dans lesquelles le logiciel du processeur puise en temps réel les informations qui lui sont utiles.

Configurer un PABX consiste à écrire ces données codées dans ses mémoires de données.

Les logiciels des PABX peuvent être des logiciels libres de tout droit de propriété et fournis en langage source ou évolué (« open source »), ce qui, en théorie, permet aux utilisateurs de ces PABX d'intervenir sur leur codage pour mieux les configurer ou les adapter.

La procédure actuelle de configuration d'un PABX est alors la suivante : on détermine la configuration souhaitée, on recherche la codification correspondant à cette configuration en fonction des normes de télécommunication en vigueur sur les deux réseaux et en fonction des caractéristiques physiques des terminaux et des caractéristiques logiques du logiciel du PABX, on codifie puis, à partir d'une interface homme-machine (IHM), on ouvre les fichiers de données concernés, on y introduit la codification des données de la configuration souhaitée, on referme et on recharge les fichiers modifiés dans les mémoires de données.

Cette opération de configuration est complexe parce que les langages sources du logiciel restent hermétiques aux utilisateurs et qu'elle dépend de normes de télécommunication elles-mêmes complexes. Cette double complexité entraîne qu'en réalité les utilisateurs ne peuvent pas à eux seuls configurer leur PABX.

Il en est de même lorsqu'ils veulent seulement y effectuer des modifications.

Enfin, la moindre erreur de codage peut avoir des conséquences graves sur le fonctionnement du PABX.

La demanderesse a cherché à remédier à cet état de fait et c'est ainsi qu'elle propose son invention.

Ainsi, la présente invention concerne tout d'abord un procédé de configuration d'un autocommutateur de réseau téléphonique reliant un réseau externe à un réseau local de terminaux de télécommunication et comportant des moyens de calcul et une première mémoire de données de configuration, le procédé comportant au moins une étape préparatoire, assistée par ordinateur, de génération de données de configuration dans une seconde mémoire de données de configuration et une étape de substitution, par ledit autocomrnutateur, du contenu de la seconde mémoire de données de configuration au contenu de la première mémoire de données de configuration.

Le codage est exempt d'erreurs et est obtenu de façon conviviale pour les utilisateurs du réseau local car il est effectué grâce à un outil de conception assistée par ordinateur, comprenant une interface homme-machine graphique.

De plus, comme il est mémorisé dans une seconde mémoire de données de configuration parallèle à la première mémoire de données de configuration, la codification est effectuée à l'avance sans perturber l'exploitation actuelle du réseau local.

Il est aussi possible, après une opération de configuration, de substituer au contenu de la seconde mémoire de données de configuration le contenu de la première mémoire de données de configuration. On peut donc revenir à une version antérieure à la configuration qui vient d'être réalisée.

L'invention concerne également un dispositif de configuration d'un autocommutateur de réseau téléphonique reliant un réseau externe à un réseau local de terminaux de télécommunication et comportant des moyens de calcul, des interfaces desdits réseaux, des premiers moyens mémoires contenant des données de configuration et au moins une interface homme machine, le dispositif étant caractérisé par le fait qu'il comporte, dans l'autocommutateur, des moyens de génération de données de configuration dans des seconds moyens mémoires et des moyens de substitution pour substituer en bloc les données de configuration générées dans les seconds moyens mémoires aux données contenues dans les premiers moyens mémoires ou le remplacement des premiers moyens mémoires par les seconds moyens mémoires.

L'invention concerne encore l'autocommutateur comportant le dispositif de configuration.

L'invention concerne enfin un système d'au moins deux autocommutateurs redondants de réseau téléphonique reliant un réseau externe à un réseau local de terminaux de télécommunication, les autocommutateurs comportant, chacun, des moyens de calcul, des interfaces des réseaux, un dispositif de configuration de l'autocommutateur, des premiers moyens mémoires contenant des données de configuration et au moins une interface homme machine, le système étant caractérisé par le fait qu'il comporte des moyens de substitution pour basculer le réseau externe de l'un des autocommutateurs sur l'autre autocommutateur sur ordre d'au moins l'un desdits moyens de génération.

D'autres caractéristiques et avantages de la présente invention apparaîtront plus clairement à la lecture de la description ci-après du procédé, du dispositif de configuration et du système de l'invention, faite en référence au dessin annexé sur lequel :
- la figure 1 est un organigramme des principales étapes du procédé de l'invention de configuration d'un autocommutateur ;
- la figure 2 est un schéma par blocs fonctionnels du dispositif de configuration de l'invention et
- la figure 3 représente une forme de réalisation d'un système d'autocommutateurs redondants comportant le dispositif de configuration de la figure 2.

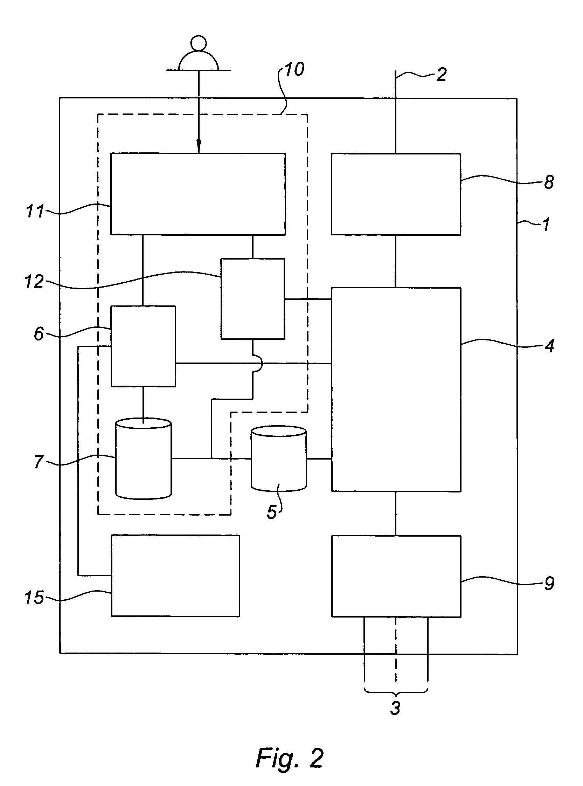

En référence à la figure 2, un autocommutateur 1, ici un PABX, relie un réseau externe 2 à un réseau interne 3 et comporte essentiellement un processeur 4 réalisant toutes les fonctions de liaison et de commutation ordinaires. Ces fonctions sont informatiquement décrites par des données constituées de paramètres (de protocoles d'échanges, annuaires) et de programmes dans une mémoire 5 organisée comme une base de données et directement exploitable par le processeur 4. On notera que par processeur, on peut entendre un ensemble de microprocesseurs.

Quand le PABX fonctionne normalement, la mémoire 5 est à jour des données de protocoles et de programmes ci-dessus. Une évolution des protocoles ou des programmes nécessite la modification de son contenu et, pendant la modification, sans mise en oeuvre de l'invention, l'arrêt du fonctionnement du PABX, ce qui est préjudiciable aux utilisateurs. En fait, le PABX n'est pas arrêté mais les fonctions en réception de distribution d'appels sont momentanément gelées pendant un court instant.

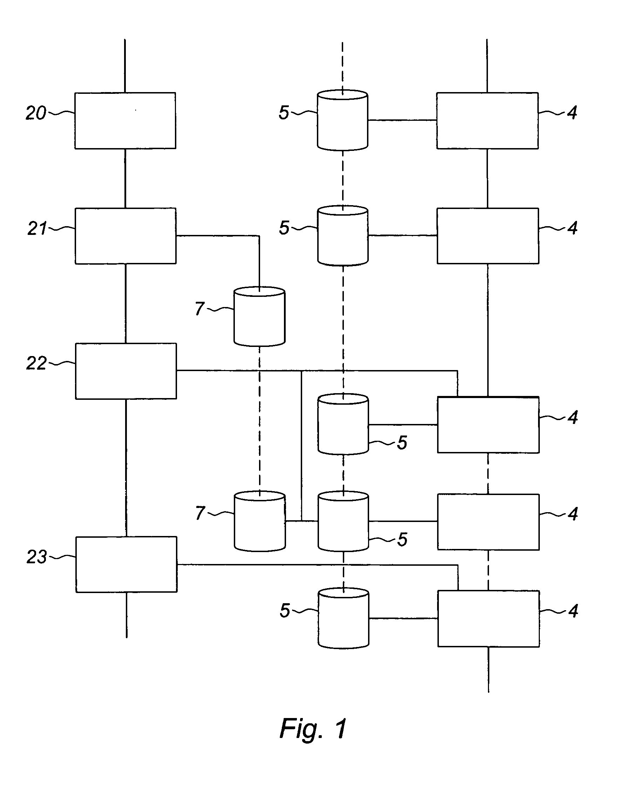

Ici, en référence à la figure 1, le procédé de modification du PABX, ou de sa configuration, limite la durée de cet arrêt de fonctionnement au strict minimum de la façon suivante :
1) les première et seconde étapes 20 et 21 sont des étapes préparatoires, la première 20 permettant de définir manuellement les nouvelles données de configuration et la seconde 21, assistée par un ordinateur, permettant leur génération dans une seconde mémoire 7 de données, parallèle à la mémoire 5 et déconnectée du processeur 4 ;
2) une étape suivante 22, au cours de laquelle on « arrête » le fonctionnement du processeur 4 et on le déconnecte de sa mémoire 5 puis on substitue en bloc le contenu de la seconde mémoire 7 au contenu de la première mémoire 5 (cette étape est illustrée sur la figure 1 par les deux lignes représentant le processeur 4 et la mémoire 5 , mais déconnectés l'un de l'autre sur la deuxième ligne sur laquelle les deux mémoires 5 et 7 sont reliées entre elles);
3) une étape finale 23, qui reconnecte la mémoire 5 au processeur 4 et qui relance le fonctionnement du PABX.

Les étapes 22 et 23 sont automatiques donc très rapides et la durée d'arrêt de fonctionnement est très courte.

Au lieu d'effectuer une substitution du contenu des mémoires 5 et 7, on pourrait également procéder à leur remplacement l'une par l'autre, par simple commutation des liaisons avec le processeur 4.

L'ordinateur permettant d'effectuer une génération assistée des paramètres et des rôles peut être le processeur 4 lui-même ou simplement un processeur intégré au PABX.

Dans les deux cas, le procédé est plus efficace si le PABX comprend les librairies nécessaires 15 contenant toutes les données de toutes les configurations possibles entre les deux réseaux interne 3 et externe 2, les caractéristiques techniques du PABX, des terminaux du réseau interne, ainsi que les rôles souhaités.

Dans cette optique, le dispositif 10 de génération de configuration de PABX est intégré au PABX 1 (figure 2).

Ce dispositif 10 comporte, en liaison avec les librairies 15, un microprocesseur 6 de génération, assistée par ordinateur, de données de configuration (paramètres et rôles) et son interface graphique 11 ou interface homme - machine IHM 11, la mémoire 7 pour stocker les données ainsi générées et un module 12 pour effectuer les opérations nécessaires à la substitution de la mémoire 7 à la mémoire 5, ou celle de leur contenu.

Le dispositif fonctionne selon le procédé déjà décrit ci-dessus : une fois l'étape 20 réalisée, on utilise l'IHM 11 et le processeur 6 renseigné grâce aux librairies 15 pour réaliser l'étape 21 permettant la génération des données de configuration dans la mémoire 7, puis on utilise le module 12 pour, à l'étape 22, arrêter le fonctionnement du processeur 4 et le déconnecter de sa mémoire 5 puis pour substituer la seconde mémoire 7 à la première mémoire 5 (ou substituer leurs contenus).

On reconnecte la mémoire 5 au processeur 4 à l'étape 23 et on relance le fonctionnement du PABX 1 par le même module 12.

Dans le cadre de ses activités, la demanderesse a mis en oeuvre ce dispositif par l'adjonction, dans le processeur 4 et dans le processeur 6, d'une application logicielle dite de configuration (CONFIG) à des applications existantes de PABX telles que ASTERISK (logiciel libre de gestion de protocole Internet IP PBX) élaboré par DIGIUM ®, qui permet d'assurer la plupart des fonctions du PABX 1, en SIP (Session Initiation Protocol ou protocole de lancement de session) ou en H323.

D'autres applications tierces (non illustrées) peuvent aussi être jointes à l'ensemble des logiciels ci-dessus, mais sont sans relation avec la configuration du PABX 1.

ASTERISK permet déjà, en fonctionnement dit temps réel, mais seulement de façon très limitée, d'exploiter des données de configuration stockées en base de données, et de compléter en temps réel ces bases de données sans arrêter le fonctionnement du PABX, notamment pour certaines données à venir en complément de celles déjà présentes dans la base, comme des données de gestion de comptes SIP ou IAX (Inter Asterisk Exchange Protocol), de boîtes vocales, de plans de numérotation /de routage. Le reste des modifications est introduit en mode dit « STATIC », par édition manuelle directe ici pendant « l'arrêt » du PABX.

Ici, grâce au procédé de configuration et au dispositif 10 ci-dessus décrits, l'application CONFIG permet de générer l'ensemble des fichiers de configuration d'ASTERISK, touchant donc l'ensemble du fonctionnement du PABX, notamment :
- les différents fichiers de configuration d'ASTERISK définis dans ses fichiers communément appelés READ ME (« lisez-moi ») et servant à informer l'utilisateur,
- les différents paramètres de configuration des applications tierces,
- les descriptions fonctionnelles informatisées des fonctions de routage complexes (interphonies, conférences), des fonctions de numérotation, de files d'attente,
- les descriptions fonctionnelles informatisées des fonctions de gestion des comptes (notamment les comptes SIP), des canaux H323, RNIS / MISDN, ou autres types de canaux,
- les descriptions fonctionnelles informatisées des fonctions de gestion des droits d'accès personnalisés, des accès sécurisés, des boîtes vocales, des fonctions de sélection linguistique,
- les descriptions fonctionnelles informatisées des fonctions d'« historisation », de sauvegarde et de restauration des configurations.

D'autres mises en oeuvre que celle décrite par le dispositif 1, 10 de la figure 2 peuvent être envisagées.

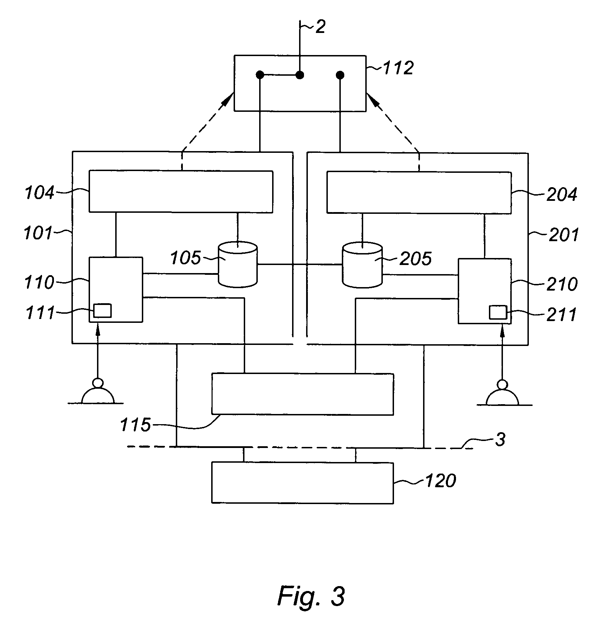

Par exemple, en référence à la figure 3, le dispositif de configuration 10 ci-dessus est adapté à la structure d'un système ici de deux autocommutateurs ou PABX redondants 101 et 201, en secours l'un de l'autre comme il va être décrit ci-après.

Les deux PABX 101 et 201 comportent les mêmes éléments que le PABX 1, notamment le processeur 4 et le dispositif de génération 1 0, respectivement 104, 110 et 204, 210 dans les PABX 101 et 201, respectivement, à deux différences près :
- les librairies 15 sont absentes et remplacées par une librairie commune 115,
- les deuxièmes mémoires 7 utilisées pour la génération de la configuration sont remplacées par la première mémoire, de l'autre PABX, respectivement 105 et 205.

Sur la figure 3, c'est le PABX 101 qui est couplé au réseau externe 2.

Les deux PABX sont par ailleurs reliés au réseau interne 3. Sur ce réseau 3, sont connectés des TMF (terminaux multifonction) 120.

Les TMF 120 connaissent les adresses réseau des deux PABX, notamment celle du PABX opérationnel 101. Ils peuvent donc lui adresser leurs requêtes de connexion internes ou externes.

Le second PABX 201 est en secours et est donc disponible, en l'absence de panne du PABX 101, pour y effectuer les opérations de configuration des étapes 20 et 21 grâce à son dispositif 210, et mémoriser les données de configuration dans sa mémoire 205.

Ici, au cours de l'étape 22, au lieu d'effectuer une substitution du contenu des mémoires 5 et 7 ou leur remplacement de l'une par l'autre après arrêt de l'exploitation du PABX, on procède à la commutation, par le commutateur 112, du réseau 2 sur le PABX 201 qui vient d'être configuré, interrompant de ce fait l'exploitation du PABX 101, et on remplace le contenu de sa mémoire 105 par celui de la mémoire 205 en cours d'exploitation.

Le commutateur 112 peut donc être commandé pour basculer le réseau externe 2 sur l'un ou l'autre des PABX 101 ou 201, soit volontairement lors d'une modification de configuration par l'intermédiaire des interfaces homme-machine 111 ou 211 des dispositifs 110 ou 210, soit involontairement par le chien de garde du processeur 104 ou 204 appartenant au PABX 101 ou 201 qui est opérationnel et qui tombe en panne.

Il peut arriver qu'une panne intervienne alors qu'une opération de configuration est en cours. On peut donc préférer deux PABX 101 et 201 redondants comportant aussi des mémoires 7 de données de configuration en cours de génération, à l'instar du PABX 1. Ainsi, le basculement de réseau 2 dû à une panne pendant une génération de configuration n'entraîne pas une impossibilité de reprise en secours du PABX en panne par le PABX servant à la génération.

On décrit un système à deux autocommutateurs, mais il pourrait y en avoir plus.

## Revendications

1. Procédé de configuration d'un autocommutateur (1) de réseau téléphonique reliant un réseau externe (2) à un réseau local (3) de terminaux de télécommunication (120) et comportant des moyens de calcul (4 ; 104, 204) et une première mémoire (5 ; 105, 205) de données de configuration, le procédé comportant au moins une étape préparatoire (21), assistée par ordinateur (6), de génération de données de configuration dans une seconde mémoire (7 ; 205, 105) de données de configuration et une étape de substitution (22), par ledit autocommutateur (1 ; 104, 204, 112), du contenu de la seconde mémoire (7 ; 205, 105) de données de configuration au contenu de la première mémoire (4 ; 104, 204) de données de configuration.

2. Dispositif (10) de configuration d'un autocommutateur (1) de réseau téléphonique reliant un réseau externe (2) à un réseau local (3) de terminaux de télécommunication (120) et comportant des moyens de calcul (4), des interfaces (8, 9) des réseaux (2, 3), des premiers moyens mémoires (5) contenant des données de configuration et au moins une interface homme machine (11), le dispositif étant **caractérisé par le fait qu'**il comporte, dans l'autocommutateur (1), des moyens (6) de génération de données de configuration dans des seconds moyens mémoires (7) et des moyens de substitution (12) pour substituer en bloc les données de configuration générées dans les seconds moyens mémoires (7) aux données contenues dans les premiers moyens mémoires (5) ou le remplacement des premiers moyens mémoires (5) pas les seconds moyens mémoires (7).

3. Dispositif selon la revendication 2, dans lequel les moyens de génération (10) comporte un outil (6) de conception assistée par ordinateur.

4. Dispositif selon l'une des revendications 2 et 3, dans lequel les moyens de génération (10) comportent une interface graphique (11).

5. Dispositif selon l'une des revendications 2 à 4, dans lequel les moyens de substitution (12) sont agencés pour pouvoir revenir à une version de configuration antérieure.

6. Autocommutateur (1) de réseau téléphonique reliant un réseau externe (2) à un réseau local (3) de terminaux de télécommunication (120) comprenant le dispositif de configuration selon l'une des revendications 2 à 5.

7. Système (101, 201, 112, 115) d'au moins deux autocommutateurs redondants (101, 201) de réseau téléphonique reliant un réseau externe (2) à un réseau local (3) de terminaux de télécommunication (120), les autocommutateurs comportant, chacun, des moyens de calcul (104, 204), des interfaces (8, 9) des réseaux (2, 3), un dispositif (110, 210) de configuration de l'autocommutateur, des premiers moyens mémoires (105, 205) contenant des données de configuration et au moins une interface homme machine (111, 211), le système étant **caractérisé par le fait qu'**il comporte des moyens de substitution (112) pour basculer le réseau externe (2) de l'un des autocommutateurs sur l'autre autocommutateur sur ordre d'au moins l'un desdits moyens de génération (110, 111 ; 210, 211).

8. Système selon la revendication 7, dans lequel les moyens de substitution (112) sont agencés pour basculer le réseau externe (2) de l'un des autocommutateurs sur l'autre autocommutateur sur ordre d'un dispositif de détection de panne compris dans les moyens de calcul (104, 204).

9. Système selon l'une des revendications 7 et 8, dans lequel les autocommutateurs (101, 201) comportent des seconds moyens mémoire (7) et des moyens (12) de substitution du contenu de ces seconds moyens mémoire (7) au contenu des premiers moyens mémoire (105, 205).

10. Procédé de configuration d'un autocommutateur (1) de réseau téléphonique reliant un réseau externe (2) à un réseau local (3) de terminaux de télécommunication (120) et comportant des moyens de calcul (4 ; 104, 204) et une première mémoire (5 ; 105, 205) de données de configuration, le procédé comportant au moins une étape préparatoire (21), assistée par ordinateur (6), de génération de données de configuration dans une seconde mémoire (7; 205, 105) de données de configuration et une étape de substitution (22), par ledit autocommutateur (1 ; 104, 204, 112), de la seconde mémoire (7 ; 205 ; 105) à la première mémoire (5 ; 105 ; 205).
